Europäisches Patentamt

European Patent Office

Office européen des brevets

(11) Numéro de publication: **0149931**
**B1**

(12) **FASCICULE DE BREVET EUROPEEN**

(45) Date de publication du fascicule du brevet:
**08.10.86**

(21) Numéro de dépôt: **84402309.3**

(22) Date de dépôt: **14.11.84**

(51) Int. Cl.⁴: **B 01 D 35/12,** B 01 D 29/34,
B 01 D 29/38

(54) Filtre à chambres multiples de réception du fluide filtré et d'un autre fluide issu du résidu de la filtration principale.

(30) Priorité: **17.11.83 FR 8318327**

(43) Date de publication de la demande:
**31.07.85 Bulletin 85/31**

(45) Mention de la délivrance du brevet:
**08.10.86 Bulletin 86/41**

(84) Etats contractants désignés:
**AT BE CH DE GB IT LI NL SE**

(56) Documents cités:
**EP - A - 0 022 021**
**EP - A - 0 108 665**

**notice "FILTRATION" - G.Moatti - FRANCE 1980**

(73) Titulaire: **GEORGES MOATTI, Société Anonyme,
125, Avenue Pierre Curie, F-78210 Saint-Cyr-L'Ecole
(FR)**

(72) Inventeur: **Christophe, Théophile Jean, 9, rue Mozart,
F-78330 Fontenay le Fleury (FR)**
Inventeur: **Moatti, Jean-Claude Prosper, 13, rue Moreau
Vauthier, F-92100 Boulogne (FR)**

(74) Mandataire: **Hoisnard, Jean-Claude et al, Cabinet Beau
de Lomenie 55, rue d'Amsterdam, F-75008 Paris (FR)**

## Description

On connaît déjà (voir par ex. la notice: «FILTRATION» – G. Moatti – FRANCE – 1980) des filtres constitués par:

– un corps de filtre comportant plusieurs chambres distinctes isolées les unes des autres,

– un empilement principal d'éléments de filtration contenu dans une desdites chambres dite chambre principale, chacun des éléments de filtration de l'empilement principal ayant un centre évidé et une face cylindrique comportant plusieurs secteurs isolés les uns des autres et étant muni sur ses périphéries radiales externe et interne d'orifices de communication de chacun de ses secteurs avec lesdites périphéries,

– un distributeur de sectionnement qui est ajusté à ladite face cylindrique qui est monté rotatif autour de l'axe de la face cylindrique et qui comporte une enceinte principale susceptible, dans une première position du distributeur, d'isoler un premier secteur d'un quelconque élément de filtration de l'empilement principal *des* autres secteurs dudit élément de filtration et de communiquer avec ledit premier secteur par l'intermédiaire de l'orifice de communication dudit premier secteur, et,

– une chambre de décharge reliée, d'une part, à l'enceinte principale au moins par un conduit interne au distributeur, d'autre part, à un raccord d'évacuation de fluide avec interposition d'une restriction calibrée.

Certains filtres sont en outre complétés par un empilement secondaire d'éléments de filtration agencé de manière analogue à l'empilement principal, le distributeur étant alors lui-même complété par une enceinte secondaire.

La fonction de ce distributeur est de permettre périodiquement le «décolmatage» des tamis de l'un ou des deux empilements, en utilisant au moins par le «décolmatage» des tamis des éléments de filtration de l'empilement secondaire, du fluide déjà filtré par l'empilement principal.

Il a été constaté, qu'au bout d'un certain temps, ce décolmatage voit son efficacité diminuer. A ce jour, deux solutions sont utilisées, qui consistent, soit à effectuer un super décolmatage plus puissant avec un gaz (souvent de l'air) comprimé, soit à attendre le prochain nettoyage complet du filtre.

Le superdécolmatage à l'air comprimé présente l'inconvénient d'introduire dans le circuit du filtre de l'air, ce qui est mauvais et déconseillé lorsque le fluide à filtrer est un carburant ou de l'huile. En outre, la manœuvre à effectuer est relativement longue et rend le filtre indisponible pendant sa réalisation.

L'absence de superdécolmatage ne réalise évidemment rien et aboutit à un démontage complet, également long, et contenu en termes d'indisponibilité du filtre.

L'invention entend remédier à ces inconvénients en proposant une nouvelle disposition permettant très facilement, de manière instantanée, d'assurer un superdécolmatage avec le même fluide déjà filtré, mais à une pression supérieure à celle du décolmatage habituel.

Selon l'invention, un conduit complémentaire relie la chambre de décharge à une enceinte sans pression, cependant qu'une vanne à deux positions est disposée sur ce conduit complémentaire, obture, dans sa première position, ledit conduit complémentaire, et, assure, dans sa deuxième position, une communication libre des deux tronçons du conduit complémentaire qui y sont raccordés.

Les dispositions de l'invention s'appliquent de manière avantageuse aux filtres dans lesquels:

– le distributeur est attelé à un moteur hydraulique d'entraînement en rotation muni d'au moins un conduit d'alimentation en fluide qui est en communication avec la chambre de décharge,

– également, lorsque le filtre comporte en outre un empilement secondaire d'éléments de filtration contenu dans une autre desdites chambres dite chambre secondaire, chacun des éléments de filtration de l'empilement secondaire ayant un centre évidé et une face cylindrique comportant plusieurs secteurs isolés les uns des autres et étant muni sur ces périphéries radiales externe et interne d'orifices de communication de chacun de ses secteurs avec lesdites périphéries, cependant que le distributeur comporte une enceinte secondaire susceptible, dans une deuxième position du distributeur éventuellement confondue avec la première position, d'isoler un premier secteur d'un quelconque élément de filtration de l'empilement secondaire *des* autres secteurs dudit élément de filtration et de communiquer avec ledit premier secteur par l'intermédiaire de l'orifice de communication dudit premier secteur, la chambre de décharge étant alors reliée à l'enceinte principale par l'intermédiaire de la chambre secondaire et de deux conduits internes au distributeur, ainsi qu'à l'enceinte secondaire également par l'intermédiaire de la chambre secondaire,

– l'enceinte sans pression est constituée par le raccord d'évacuation lui-même.

L'avantage de cette disposition nouvelle est, en réalisant effectivement un superdécolmatage, d'éviter le mélange d'un fluide à filtrer liquide, tel que de l'huile ou du carburant, avec un gaz comprimé. Ainsi, sont en particulier évités les inconvénients d'oxydation et/ou de formation de bulles de gaz au sein du liquide devant être filtré.

L'invention sera mieux comprise, et des caractéristiques secondaires et leurs avantages apparaîtront au cours de la description d'une réalisation donnée ci-dessous à titre d'exemple.

Il est entendu que la description et les dessins ne sont donnés qu'à titre indicatif et non limitatif.

Il sera fait référence aux dessins annexés, dans lesquels:

– la figure 1 est une coupe axiale d'un filtre conforme à l'invention, dans une première configuration de fonctionnement;

– les figures 2 et 3 sont des coupes, respectivement suivant II-II et III-III, de la figure 1;

– la figure 4 est une vue développée de la face cylindrique du distributeur du filtre de la figure 1 et de la face en regard des empilements d'éléments de filtration;

— la figure 5 est une coupe axiale du même filtre que celui de la figure 1, mais dans une deuxième configuration de fonctionnement;

— la figure 6 est une coupe suivant VI-VI de la figure 5;

— la figure 7 est une vue développée analogue à celle de la figure 4, mais correspondant à la configuration de la figure 5; et,

— la figure 8 est une coupe axiale partielle, analogue à celle des figures 1 et 5, du filtre dans une troisième configuration de fonctionnement.

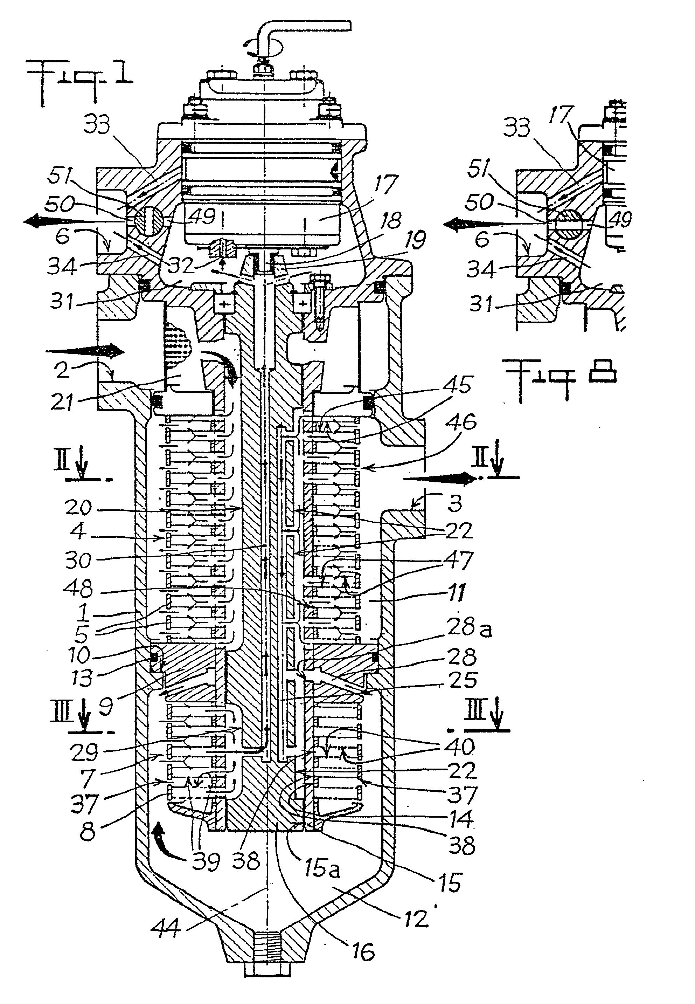

Le filtre des figures 1 à 4 comporte:

— un corps de filtre 1, muni d'un raccord d'admission 2 du fluide devant être filtré, d'un raccord d'évacuation 3 du fluide filtré par un empilement principal 4 d'éléments de filtration 5, et d'un raccord d'évacuation 6 du fluide de décolmatage des éléments de filtration 5, après filtration de ce fluide de décolmatage par un empilement secondaire 7 d'éléments de filtration 8,

— lesdits empilements principal 4 et secondaire 7, séparés par une pièce intermédiaire 9, qui est en appui sur un épaulement 10, dont est muni le corps 1, et qui ménage à l'intérieur dudit corps deux chambres principale 11 et secondaire 12 séparées avec étanchéité (13), la chambre principale 11 communiquant avec le raccord d'évacuation 3,

— un alésage 14, commun aux deux empilements 4 et 7, auquel est ajustée une bague intérieure 15, à l'intérieur de laquelle un distributeur 16 est monté dans un alésage 15a, rotatif autour d'un axe 44,

— un moteur hydraulique 17, d'entraînement pas à pas du distributeur 16, monté sur le corps 1 et attelé par une tête d'entraînement 18 à une extrémité 19 au distributeur 16,

— une gorge périphérique 20, ménagée dans le distributeur 16, qui est en communication de la chambre d'admission 21 du fluide devant être filtré, elle-même étant en communication avec le raccord d'admission 2,

— une rainure 22, qui est ménagée dans le distributeur 16 et permet d'isoler *un* secteur angulaire 23 de certains seulement, ou de tous les éléments de filtration 5 de l'empilement principal 4 *des* autres secteurs angulaires 24 des mêmes éléments de filtration 5,

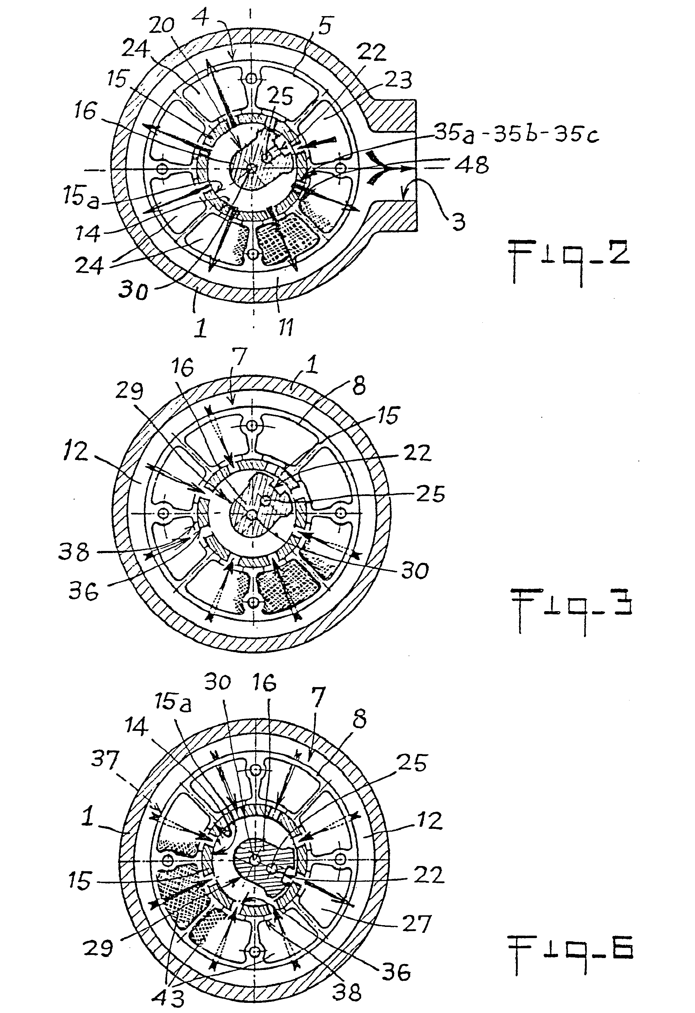

— la rainure 22, ménagée dans le distributeur 16 est susceptible de communiquer, d'une part (figures 1 et 3), par l'intermédiaire d'un conduit 25, interne au distributeur, avec l'orifice 28a, par lequel l'un des conduits 28, ménagés dans la pièce intermédiaire 9, débouche dans l'alésage 15a de la bague 15, d'autre part (figures 5 et 6), avec seulement un secteur angulaire 27 de chaque élément de filtration 8 de l'empilement secondaire 7,

— une gorge périphérique 29, ménagée dans le distributeur 16, qui communique, par un conduit 30, interne au distributeur 16, avec une chambre supérieure 31 ménagée dans le corps 1,

— des conduits d'alimentations 32 du moteur 17, communiquant avec la chambre supérieure 31,

— le conduit d'échappement 33 du moteur 17 communiquant avec le raccord d'évacuation 6,

— un conduit de liaison calibré (ayant une perte de charge déterminée) 34 reliant la chambre supérieure 31 au raccord d'évacuation 6,

— un conduit complémentaire à deux tronçons 49, 50 reliant également la chambre supérieure 31 au raccord d'évacuation 6,

— une vanne 51, ou robinet à deux positions, à laquelle sont raccordés les deux tronçons 49 et 50 du conduit complémentaire.

Il convient de noter les dispositions suivantes:

— la rainure 22 est susceptible de communiquer, par l'intermédiaire de trous 35a, 35b, 35c, ménagés dans la bague 15 dans la zone de l'empilement principal 4, avec un secteur 23 des éléments de filtration correspondants 5;

— cette même rainure 22 est susceptible de communiquer, par l'intermédiaire de trous 36 ménagés dans la bague 15 dans la zone de l'empilement secondaire 7, avec un secteur 27 des éléments de filtration correspondants 8;

— le conduit 25, interne au distributeur 16, qui communique avec la rainure 22, ne débouche que dans la chambre secondaire 12;

— le conduit 28, ménagé dans la pièce intermédiaire 9, débouche, en outre, dans la chambre secondaire 12;

— des orifices 37 des éléments de filtration 8 de l'empilement secondaire 7 sont disposés sur la périphérie externe de cet empilement et sont séparés d'orifices 38 des mêmes éléments de filtration disposés sur la périphérie interne et communiquant avec les trous 36 de la bague 15, par les tamis de filtration;

— ces tamis de filtration ont, chacun, une face 39, qui communique avec la chambre secondaire 12 par l'intermédiaire des orifices 37, *et*, une face 40, qui communique avec l'alésage central 14 par l'intermédiaire des orifices 38;

— les trous de la bague 15 disposés dans la zone de l'empilement principal 4 sont répartis, pour chaque colonne de secteurs 23 ou 24 superposés des éléments de filtration 5, en trois groupes distincts d'orifices 35a, 35b, 35c;

— les orifices de chaque groupe étant alignés sur une droite 41a, 41b, 41c, respectivement, parallèle à une génératrice de la surface cylindrique de l'alésage 15a de la bague 15; ces diverses droites 41a, 41b, 41c, étant, en outre, légèrement décalées l'une par rapport aux autres de manière que la rainure 22 ne communique, en permanence qu'avec une section globale des trous 35a et/ou 35b et/ou 35c sensiblement constante et égale à la section globale des trous 35a, ou des trous 35b, ou des trous 35c, et non de l'ensemble des trous 35a, 35b, 35c;

— la rainure 22 est elle-même parallèle à une génératrice de la surface cylindrique de l'alésage 15a de la bague 15;

— les trous 36 de la bague 15, qui correspondent aux orifices 38 des secteurs superposés d'une même colonne de secteurs d'éléments de filtration 8, sont alignés sur une droite 42, parallèle à une génératrice de la surface cylindrique de l'alésage 15a de la bague 15;

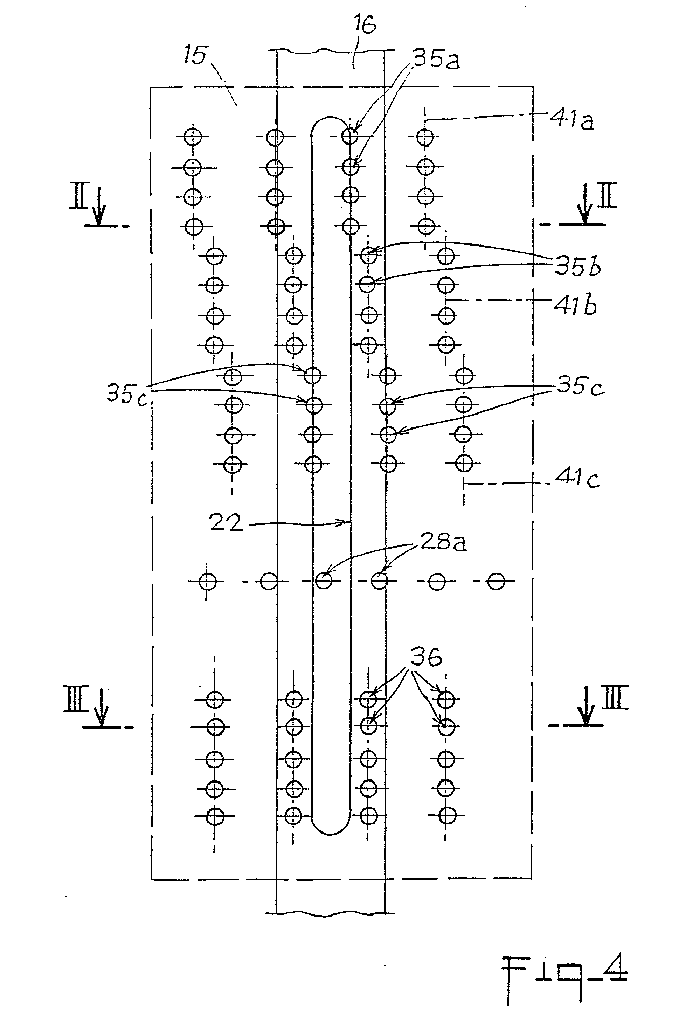

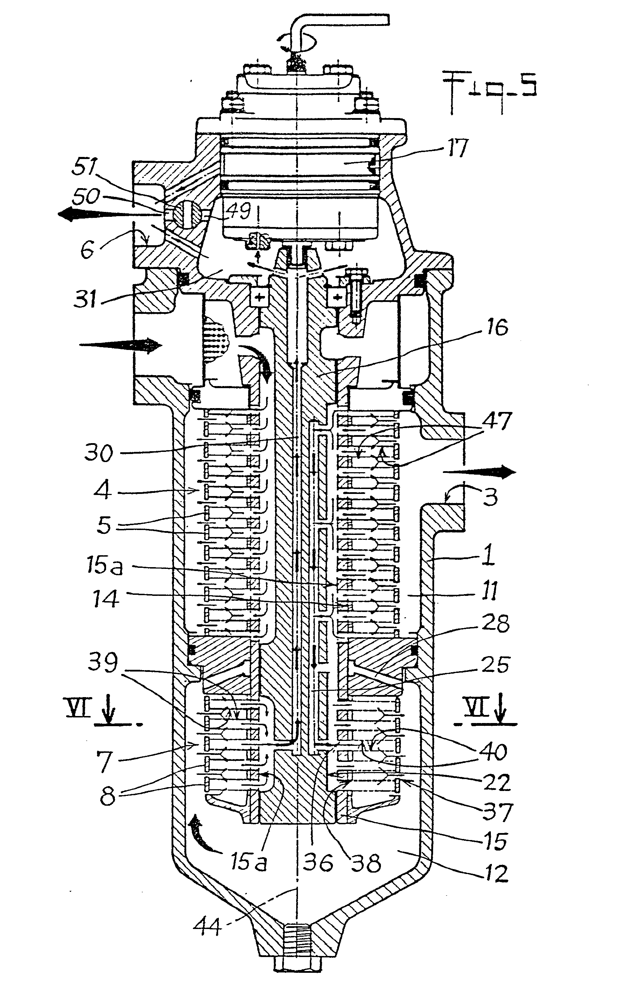

— selon la position relative du distributeur 16 par rapport à la bague 15, dans l'exemple représenté, *ou bien* la rainure 22 est isolée des trous 36 (figures 1, 3 et 4), et communique alors avec l'un des orifices 28*a ou bien* la rainure 22 communique avec les trous 36 de l'une des rangées de trous 36 (figures 5, 6 et 7) et est alors isolée des orifices 28*a*;

— les tamis de filtration des éléments de filtration 5 de l'empilement principal 4 ont, chacun, une face 45, qui communique avec la chambre principale 11 par l'intermédiaire d'orifice 46, *et*, une face 47, qui communique avec les trous 35*a*, 35*b*, ou 35*c* de la bague 15 par l'intermédiaire d'orifices 48;

— l'axe du conduit 30 est confondu avec l'axe de rotation 44;

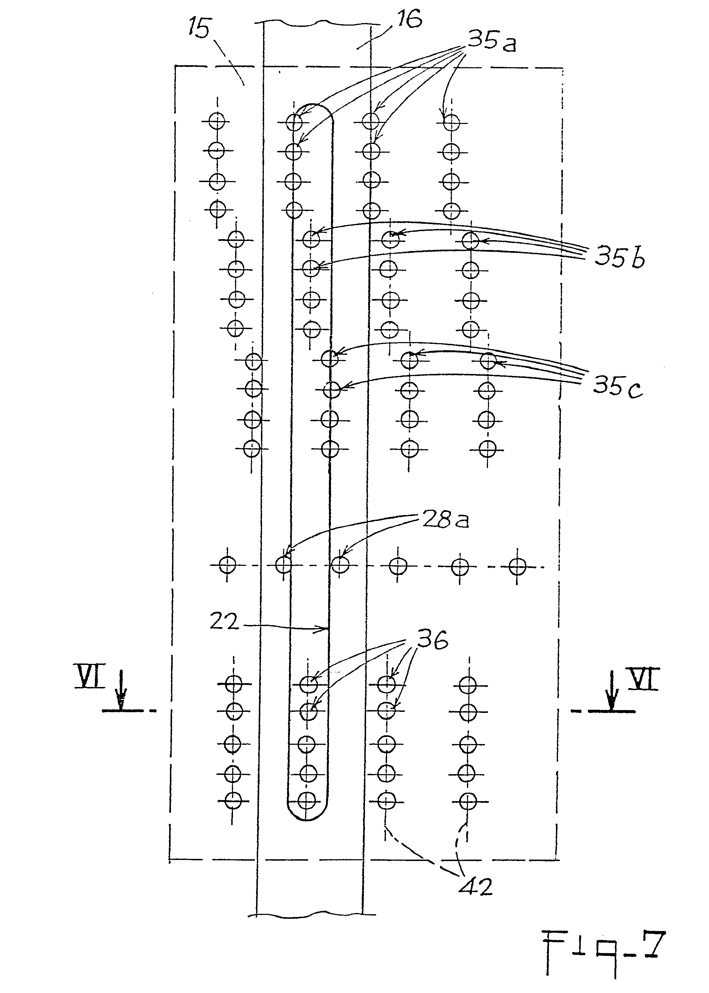

— dans les configurations des figures 1 et 5, la vanne 51 obture le conduit 49-50, alors que dans la configuration de la figure 8, cette vanne 51 établit une communication libre du tronçon 49 avec le tronçon 50;

— le raccord d'évacuation 6 fait retourner le fluide qui le traverse vers un réservoir de fluide sans pression (ou à pression très faible).

Le fluide devant être filtré, admis dans la chambre d'admission 21, parvient dans la gorge 20 du distributeur, passe à travers les orifices de la périphérie interne des secteurs 24 des éléments de filtration 5 qui sont en regard de la gorge 20, puis à travers les trous correspondants 35*a* et/ou 35*b* et/ou 35*c* de la bague 15, traversent les tamis, puis les orifices de la périphérie externe des mêmes secteurs, et ressort filtré dans la chambre principale 11, pour ensuite être évacué à travers le raccord d'évacuation 3.

Cependant une partie du fluide filtré contenu dans la chambre principale 11 traverse, en sens inverse du précédent, de la périphérie externe vers la périphérie interne de l'empilement 4, ceux des secteurs 23 des éléments de filtration 5 qui sont disposés en regard de la rainure 22 (figure 2). Cette faible partie de fluide filtré permet de dégager des tamis desdits secteurs 23 les impuretés qui s'y étaient préalablement déposées et ainsi, en nettoyant ces tamis, de les rendre de nouveau aptes à une filtration efficace. Cette partie du fluide, qui traverse les tamis des secteurs 23 est collectée par la rainure 22 et véhiculée, chargée des impuretés détachées des tamis des secteurs 23 des éléments de filtration 5 en regard de la partie de la bague 15 correspondant aux orifices 28*a* et aux trous 36.

Dans la configuration des figures 1, 3 et 4, ce fluide chargé d'impuretés est déversé dans la chambre secondaire 12. A partir de cette chambre, le fluide traverse, de la périphérie externe vers la périphérie interne des secteurs des éléments de filtration de l'empilement secondaire 7, qui sont en regard de la gorge 29 du distributeur 16, et, filtré par les tamis desdits secteurs, de la gorge 29 est dirigé par le conduit 30, la chambre 31 et le conduit 34, vers le raccord d'évacuation 6 pour une nouvelle utilisation.

Dans la configuration des figures 5, 6 et 7, le fluide chargé d'impuretés, contenu dans la gorge 22, traverse les trous 36 et les orifices 38, dépose ses impuretés sur les faces 40 des tamis des secteurs 27 des éléments de filtration 8, et, traversant les orifices 37, parvient dans la chambre 12. Par le circuit déjà défini ci-avant, le fluide de la chambre 12 est filtré, puis véhiculé jusqu'au raccord d'évacuation 6.

Aussi bien dans la configuration de la figure 1, que dans celle de la figure 5, la vanne 51 obturant le conduit complémentaire 49-50 d'une part, et le calibrage du conduit 34 créant une perte de charge entre la chambre supérieure 31 et le raccord d'évacuation 6 d'autre part, le fluide contenu dans la chambre supérieure 31 a une pression supérieure à celle du fluide contenu dans le raccord 6. Cette pression du fluide contenu dans la chambre supérieure 31 est en particulier suffisante pour que ce fluide entraîne en rotation le moteur 17.

En outre, la pression dans la chambre supérieure 31 constitue un obstacle à l'écoulement du fluide de décolmatage de la chambre principale vers la gorge 22, à travers les éléments de filtration 5 de l'empilement principal 4, et de la gorge 22 vers la chambre secondaire 12 à travers les éléments de filtration 8 de l'empilement secondaire 7. Cet obstacle seulement partiel, provoque une limitation du débit du fluide nécessaire au décolmatage, limitation nécessaire, car, en son absence, la totalité du filtre filtré contenu dans la chambre principale 11 serait utilisée pour décolmater les tamis, de sorte qu'aucune fraction de ce fluide ne serait utilisable pour un quelconque circuit autre que le filtre lui-même.

Lorsque, à intervalles de temps réguliers, il paraît judicieux de décolmater les tamis plus puissamment que lors du fonctionnement habituel (conforme aux configurations des figures 1 et 5), l'utilisateur place la vanne 51 dans la configuration de la figure 8, qui correspond à la non-obturation du conduit complémentaire 49-50. Dans cette nouvelle configuration, la perte de charge entre la chambre supérieure 31 et le raccord d'évacuation 6 est inférieure à la valeur qu'elle avait dans les configurations des figures 1 et 5. De manière analogue, la pression dans la chambre supérieure 31 est elle aussi inférieure à sa valeur antérieure, de sorte que l'écoulement du fluide de décolmatage est facilité. C'est ainsi qu'est réalisé le décolmatage plus puissant recherché, ou «superdécolmatage», ceci par la simple manœuvre de la vanne 51, et avec le même fluide que celui épuré par le filtre.

A titre indicatif, il peut être noté que si, en fonctionnement usuel (figures 1 et 5), le débit de fluide utilisé pour le décolmatage est égal à environ 5% (cinq pour cent) du débit filtré par l'empilement principal 4, pendant le «superdécolmatage», ce débit peut être égal à 20% du débit filtré par l'empilement principal 4, soit quatre fois supérieur à la valeur normale. Ces chiffres relatifs à des filtres réels permettent de comprendre l'efficacité de cette phase de «superdécolmatage» pendant laquelle les tamis sont entièrement débarrassés des impuretés qui avaient pu s'y déposer antérieurement.

A noter enfin que la mise en place de la vanne 51 dans la configuration de «superdécolmatage» (figure 8), au lieu d'être commandée par l'utilisateur, peut, en variante, être réalisée de manière automatique par adoption d'un détecteur d'encrassement des tamis des empilements de filtration, ou encore d'un compteur de temps d'utilisation.

L'invention n'est pas limitée à la réalisation représentée, mais en couvre au contraire toutes les variantes qui pourraient lui être apportées sans sortir de son cadre, ni de son esprit.

## Revendications

1. Filtre constitué par:
— un corps de filtre (1) comportant plusieurs chambres distinctes (11, 12, 31) isolées les unes des autres,
— un empilement principal (4) d'éléments de filtration (5) contenu dans une (11) desdites chambres dite chambre principale (11), chacun des éléments de filtration de l'empilement principal ayant un centre évidé (14) et une face cylindrique (14, 15a), comportant plusieurs secteurs (23-24) isolés les uns des autres et étant muni sur ses périphéries radiales externe et interne d'orifices de communication de chacun de ses secteurs avec lesdites périphéries,
— un distributeur de sectionnement (16), qui est ajusté à ladite face cylindrique (15a), qui est monté rotatif autour de l'axe de la face cylindrique (44) et qui comporte une enceinte principale (22) susceptible, dans une première position du distributeur, d'isoler un premier secteur (23) d'un quelconque élément de filtration (5) de l'empilement principal (4) *des* autres secteurs (24) dudit élément de filtration et de communiquer avec ledit premier secteur par l'intermédiaire de l'orifice de communication (35a, 35b, 35c) dudit premier secteur, et,
— une chambre de décharge (31) reliée, d'une part, à l'enceinte principale (22) au moins par un conduit (25-30) interne au distributeur, d'autre part, à un raccord d'évacuation (6) de fluide avec interposition d'une restriction calibrée (34), caractérisé en ce qu'un conduit complémentaire (49-50) relie la chambre de décharge (31) à une enceinte sans pression (6), cependant qu'une vanne (51) à deux positions est disposée sur ce conduit complémentaire, obture, dans sa première position (figures 1 et 5), ledit conduit complémentaire, et, assure, dans sa deuxième position (figure 8), une communication libre des deux tronçons (49 et 50) du conduit complémentaire qui y sont raccordés.

2. Filtre selon la revendication 1, caractérisé en ce que, de manière connue en soi, le distributeur (16) est attelé à un moteur hydraulique (17) d'entraînement en rotation muni d'au moins un conduit (32) d'alimentation en fluide qui est en communication avec la chambre de décharge (31).

3. Filtre selon l'une quelconque des revendications 1 et 2, caractérisé en ce que, de manière connue en soi, il comporte en outre, un empilement secondaire (7) d'éléments de filtration (8) contenu dans une autre (12) desdites chambres dite chambre secondaire (12), chacun des éléments de filtration de l'empilement secondaire (7) ayant un centre évidé (14) et une face cylindrique (14, 15a), comportant plusieurs secteurs (27-43) isolés les uns des autres et étant muni sur ses périphéries radiales externe et interne d'orifices de communication de chacun de ses secteurs avec lesdites périphéries, cependant que le distributeur comporte une enceinte secondaire (22) susceptible, dans une deuxième position du distributeur éventuellement confondue avec la première position, d'isoler un premier secteur (27) d'un quelconque élément de filtration (8) de l'empilement secondaire (7) *des* autres secteurs (43) dudit élément de filtration et de communiquer avec ledit premier secteur par l'intermédiaire de l'orifice de communication (36-38) dudit premier secteur, la chambre de décharge (31) étant alors reliée à l'enceinte principale (22) par l'intermédiaire de la chambre secondaire (12) et de conduits (25-30) internes au distributeur, ainsi qu'à l'enceinte secondaire (22) également par l'intermédiaire de la chambre secondaire (12).

4. Filtre selon l'une quelconque des revendications 1 à 3, caractérisé en ce que l'enceinte sans pression est constituée par le raccord d'évacuation (6) lui-même.

## Patentansprüche

1. Filter, bestehend aus:
— einem Filterkörper (1) mit mehreren unterschiedlichen, voneinander getrennten Kammern (11, 12, 31),
— einem Hauptstapel (4) von Filtrationselementen (5), der in einer der Kammern (11), der sogenannten Hauptkammer (11), enthalten ist, wobei jedes der Filtrationselemente des Hauptstapels einen ausgesparten Mittelteil (14) und eine Zylinderfläche (14, 15a) aufweist, mehrere voneinander getrennte Sektoren (23-24) umfasst und an seinem radialen Aussen- und Innenumfang mit Öffnungen zur Verbindung jedes seiner Sektoren mit den Umfängen versehen ist,
— einem Sektorenverteiler (16), der mit der Zylinderfläche (15a) ausgerichtet ist, drehbar um die Achse (44) der Zylinderfläche angeordnet ist und ein Hauptgehäuse (22) umfasst, das in einer ersten Position des Verteilers einen ersten Sektor (23) eines der Filtrationselemente (5) des Hauptstapels (4) von den anderen Sektoren (24) des Filtrationselements trennen und mit dem ersten Sektor über die Verbindungsöffnung (35a, 35b, 35c) des ersten Sektors kommunizieren kann,
— einer Auslasskammer (31), die einerseits mit dem Hauptgehäuse (22) über mindestens eine Leitung (25-30) innerhalb des Verteilers, anderseits unter Zwischenschaltung einer kalibrierten Verengung (34) mit einem Fluidum-Entleerungsstutzen (6) verbunden ist, dadurch gekennzeichnet, dass eine Komplementärleitung (49-50) die Auslasskammer (31) mit einem drucklosen Gehäuse (6) verbindet, wobei ein Ventil (51) mit zwei Positionen an dieser Komplementärleitung angeordnet ist, in seiner ersten Position (Fig. 1 und 5) die Komplementärleitung verschliesst und in seiner zweiten Position (Fig. 8) eine freie Kommunikation der beiden dort zusammentreffenden Abschnitte (49 und 50) der Komplementärleitung gewährleistet.

2. Filter nach Anspruch 1, dadurch gekennzeichnet, dass der Verteiler (16) auf an sich bekannte Weise an einen Hydraulikmotor (17) für Rotationsantrieb, der mit mindestens einer mit der Auslasskammer (31) kommunizierenden Leitung (32) zur Speisung mit Fluidum versehen ist, angekuppelt ist.

3. Filter nach einem der Ansprüche 1 und 2, dadurch gekennzeichnet, dass er auf an sich bekannte Weise weiters einen Nebenstapel (7) von Filtrationselemente (8), der in einer anderen (12) der Kammern, der sogenannten Nebenkammer (12) enthalten ist, umfasst, wobei jedes der Filtrationselemente des Nebenstapels (7) einen ausgesparten Mittelteil (14) und eine Zylinderfläche (14, 15a) aufweist, mehrere voneinander getrennte Sektoren (27-43) umfasst und an seinem radialen Aussen- und Innenumfang mit Öffnungen zur Verbindung jedes der Sektoren mit den Umfängen versehen ist, wobei der Verteiler ein Nebengehäuse (22) umfasst, das in einer zweiten Position des Verteilers, die gegebenenfalls mit der ersten Position zusammenfällt, einen ersten Sektor (27) eines der Filtrationselemente (8) des Nebenstapels (7) von den anderen Sektoren (43) des Filtrationselements trennen und mit dem ersten Sektor über die Verbindungsöffnung (36-38) des ersten Sektors kommunizieren kann, wobei die Auslasskammer (31) dann über die Nebenkammer (12) und Leitungen (25-30) innerhalb des Verteilers mit dem Hauptgehäuse (22) sowie ebenfalls über die Nebenkammer (12) mit dem Nebengehäuse (22) verbunden ist.

4. Filter nach einem der Ansprüche 1 bis 3, dadurch gekennzeichnet, dass das drucklose Gehäuse durch den Entleerungsstutzen (6) selbst gebildet ist.

## Claims

1. A filter constituted by:
— a filter body (1) comprising a plurality of distinct chambers (11, 12, 13) isolated from one another,
— a main stack (4) of filtering elements (5) contained in one (11) of said chambers, called main chamber (1), each of the filtering elements of the main stack having a recessed centre (14) and a cylindrical side (14, 15a), comprising a plurality of sections (23-24) isolated from one another and being provided on its outer and inner radial circumferences with orifices for communication of each of its sections with said circumferences,
— a shut-off distribution valve (16), which is adjusted to said cylindrical side (15a), which is mounted to rotate about the axis of the cylindrical side (44) and which comprises a main enclosure (22) capable, in a first position of the distribution valve, of isolating a first section (23) of any one filtering element (5) of the main stack (4) from the other sections (24) of said filtering element and of communicating with said first section via the orifice (35a, 35b, 35c) for communication of said first section, and
— a discharge chamber (31) connected, on the one hand, to the main enclosure (22) at least by a duct (25-30) inside the distribution valve, on the other hand, to a fluid evacuation union (6) with the interposition of a calibrated restriction (34), characterized in that a complementary duct (49-50) connects the discharge chamber (31) to an enclosure without pressure (6), whilst a two-position valve (51) is disposed in this complementary duct, obturates, in its first position (figures 1 and 5), said complementary duct and, in its second position, ensures free communication of the two sections (49 and 50) of the two complementary ducts connected thereto.

2. Filter according to claim 1, characteriezd in that, in manner known per se, the distribution valve (16) is connected to a hydraulic motor (17) for driving in rotation, provided with at least one fluid supply duct (32) which is in communication with the discharge chamber.

3. Filter according to any one of claims 1 and 2, characterized in that, in manner known per se, it further comprises a secondary stack (7) of filtering elements (8) contained in another (12) of said chambers, called secondary chamber (12), each of the filtering elements of the secondary stack (7) having a recessed centre (14) and a cylindrical side (14, 15a) comprising a plurality of sections (27-43) isolated from one another and being provided on its outer and inner radial circumferences with orifices for communication of each of its sections with said circumferences, whilst the distribution valve comprises a secondary enclosure (22) capable, in a second position of the distribution valve possibly merged with the first position, of isolating a first section (27) of any one filtering element (8) of the secondary stack (7) from the other sections (43) of said filtering element and of communicating with said first section via the orifice for communication (36-38) of said first section, the discharge chamber (31) then being connectd to the main enclosure (22) via the secondary chamber (12) and ducts (25-30) inside the distribution valve, as well as to the secondary enclosure (22) likewise via the secondary chamber (12).

4. Filter according to any one of claims 1 to 3, characterized in that the enclosure without pressure is constituted by the evacuation union (6) itself.

Fig. 1

Fig. 8

Fig-2

Fig-3

Fig-6

Fig_4

Fig. 5

Fig. 7